# EUROPEAN PATENT APPLICATION

(11) **EP 4 700 958 A1**
(43) Date of publication of application: **25.02.2026**
(21) Application number: 25762278.7
(22) Date of filing: 03.01.2025
(51) Int. Cl.: H01M 50/383, H01M 50/233, H01M 50/289, H01M 50/325, H01M 50/249, F16B 5/02

(54) **BATTERY PACK AND VEHICLE INCLUDING SAME**

(30) Priority: 27.02.2024 KR 20240028132
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR)
(74) Representative: Plasseraud IP
(86) International application number: PCT/KR2025/000112
(87) International publication number: WO 2025/183342

(57) **Abstract**

Disclosed is a battery pack and a vehicle including the same. The battery pack includes a plurality of battery modules in which a plurality of battery cells are stacked; a pack case in which the plurality of battery modules are accommodated; and a cover member coupled to the pack case, wherein the cover member is configured in a double structure in which at least one structure is formed to be deformable.

## Description

### TECHNICAL FIELD

This application is based on and claims priority from Korean Patent Application No. 10-2024-0028132, filed on February 27, 2024, with the Korean Intellectual Property Office, the disclosure of which is incorporated herein in its entirety by reference.

The present disclosure relates to a battery pack and a vehicle including the same, and more specifically, to a battery pack capable of evenly dispersing heat and smoothly discharging gas when a thermal event occurs, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module that includes a module case capable of protecting battery cells and a plurality of battery cells stacked and inserted into the module case, and a battery pack that includes a plurality of battery modules.

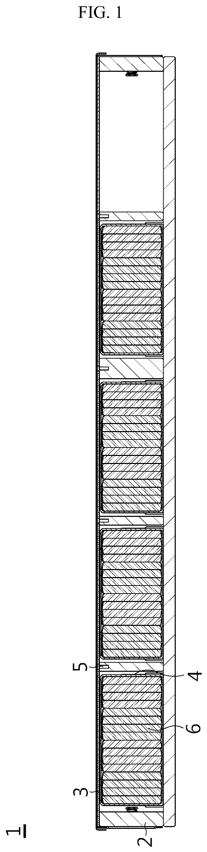

FIG. 1 is a cross-sectional view showing a conventional battery pack.

Referring to FIG. 1, in the case of the conventional battery pack 1, the cover member 3 coupled to the pack case 2 is in contact with the battery module 4, or is positioned in close proximity thereto and fixed thereto by a fastening member 5 such as a bolt. That is, in the conventional battery pack 1, since one cover member 3 is firmly fixed to the pack case 2, even if a flame occurs, no free space or buffer space is formed through which heat or gas caused by the flame may move.

In this state, if a flame occurs in the battery cell 6, the heat caused by the flame is blocked by the cover member 3 not to spread, but is concentrated inside the battery module 4 where the flame occurs. In addition, since the gas generated inside the battery module 4 is not discharged, the internal pressure increases and the possibility of an explosion of the battery module 4 or the battery pack 1 increases.

At this time, if explosion occurs in the battery module 4 in which a flame is generated, flame may be propagated to another battery module 4 to cause a thermal runaway phenomenon, and if the flame leaks to the outside due to the thermal runaway phenomenon, there is a problem that the driver of the electric vehicle may be burned or put in a dangerous situation.

Alternatively, there is a problem in that the battery module 4 or the battery pack 1 is damaged or burned down by a chain reaction of flames caused by flame propagation, so it may be impossible to secure the stability of the battery module 4 or the battery pack 1.

### DISCLOSURE

### Technical Problem

The present disclosure is designed to solve the problems of the related art, and therefore the present disclosure is directed to providing a battery pack, which may prevent heat concentration by evenly dispersing the heat caused by the flame within the battery pack when a flame occurs in any one battery cell, thereby achieving uniform thermal distribution, and a vehicle including the same.

In addition, the present disclosure is directed to providing a battery pack in which venting is facilitated to easily discharge gas, and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery modules in which a plurality of battery cells are stacked; a pack case in which the plurality of battery modules are accommodated; and a cover member coupled to the pack case, wherein the cover member is configured in a double structure in which at least one structure is formed to be deformable.

In an embodiment, the cover member may include a first cover formed so that at least one side thereof is deformable; and a second cover spaced apart from the first cover by a preset interval.

In an embodiment, the first cover may be located at an inner side, and the second cover may be located at an outer side.

In an embodiment, the pack case may include a lower frame on which the plurality of battery modules are mounted; a side frame extending upwardly from an edge of the lower frame; an inner frame extending upwardly inside the lower frame and coupled to the side frame; and a barrier frame coupled to the inner frame and interposed between the plurality of battery modules, and a fastening coupling unit to which the second cover is fastened may be formed on at least one of the inner frame and the barrier frame.

In an embodiment, the fastening coupling unit may include a protrusion configured to protrude from at least one of the inner frame and the barrier frame; and a fastening hole formed in the protrusion

In an embodiment, the first cover may have a through hole formed at a position corresponding to the protrusion.

In an embodiment, the through hole of the first cover may pass through the protrusion, and the first cover may come in contact with at least one of the inner frame and the barrier frame.

In an embodiment, the second cover may be located at an upper side of the first cover and fastened to the fastening coupling unit.

In an embodiment, the first cover may be fastened at an edge thereof, and a movement passage may be formed as deformation occurs in an area of the first cover except the edge due to a venting gas generated from the battery cell.

In an embodiment, the first cover may be deformed within the interval formed between the second cover and the first cover.

In an embodiment, a venting portion may be formed at the pack case.

In an embodiment, the venting portion may include a venting hole through which a venting gas generated from the battery cell is discharged; and a venting valve configured to close the venting hole and configured to be opened when an internal pressure of the pack case exceeds a preset value.

In an embodiment, a movement passage may be formed when the first cover is deformed, and the venting gas may move through the movement passage to the venting portion.

Meanwhile, according to another aspect of the present disclosure, there may be provided a vehicle including at least one battery pack described above.

### Advantageous Effects

The embodiments of the present disclosure have the effect of preventing heat concentration by evenly dispersing the heat caused by the flame within the battery pack when a flame occurs in any one battery cell, thereby achieving uniform thermal distribution.

In addition, the present disclosure has the effect of facilitating venting and allowing gas to be discharged easily.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view showing a conventional battery pack.
FIG. 2 is a perspective view showing a battery pack according to an embodiment of the present disclosure as a whole.
FIG. 3 is an exploded perspective view showing the battery pack according to an embodiment of the present disclosure.
FIG. 4 is a drawing showing a first cover coupled to a pack case in FIG. 3.
FIG. 5 is an enlarged view of part B in FIG. 4.
FIG. 6 is a plan view showing a battery pack according to an embodiment of the present disclosure with the cover member removed.
FIG. 7 is a drawing showing a venting portion in the battery pack according to an embodiment of the present disclosure.
FIG. 8 is a drawing showing a venting hole of the venting portion in FIG. 7.
FIG. 9 is a cross-sectional view taken along line A-A' of FIG. 2.
FIG. 10 is a drawing showing a deformed form of the first cover in FIG. 9.
FIG. 11 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

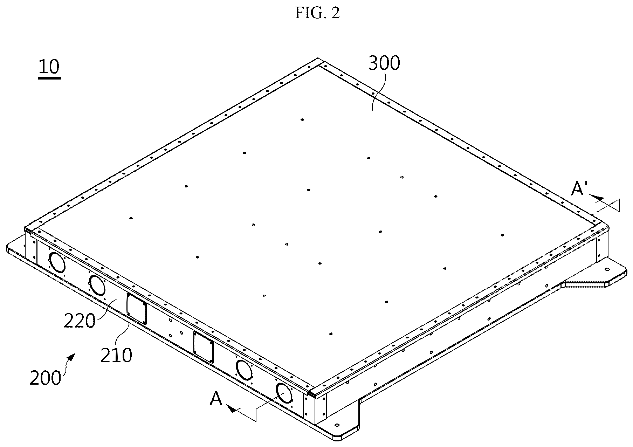

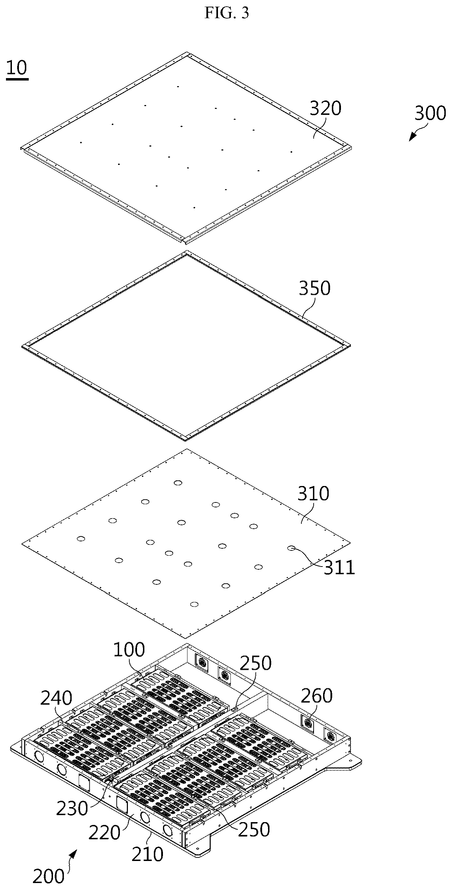

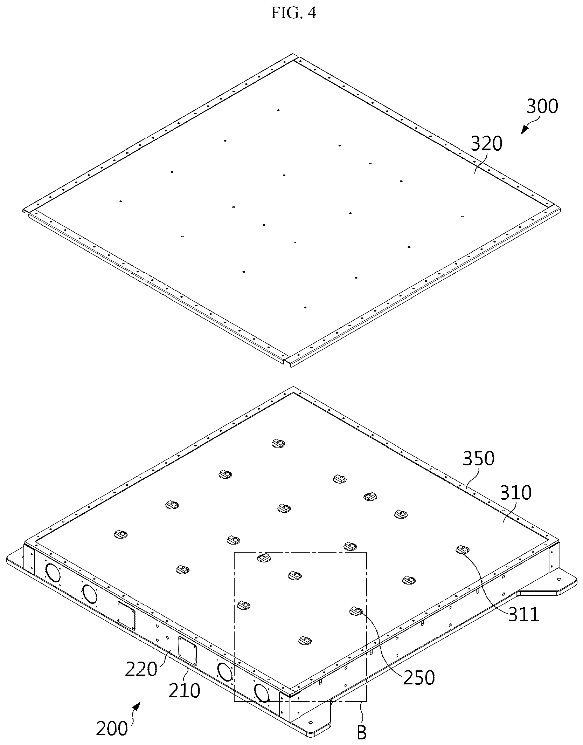

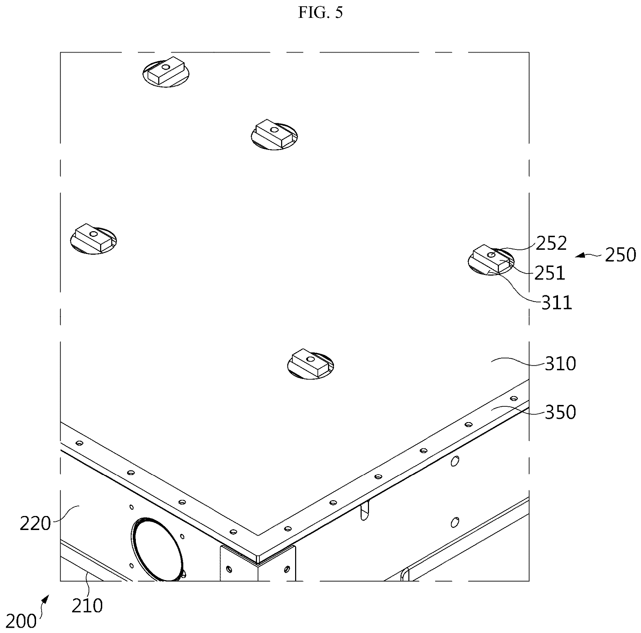

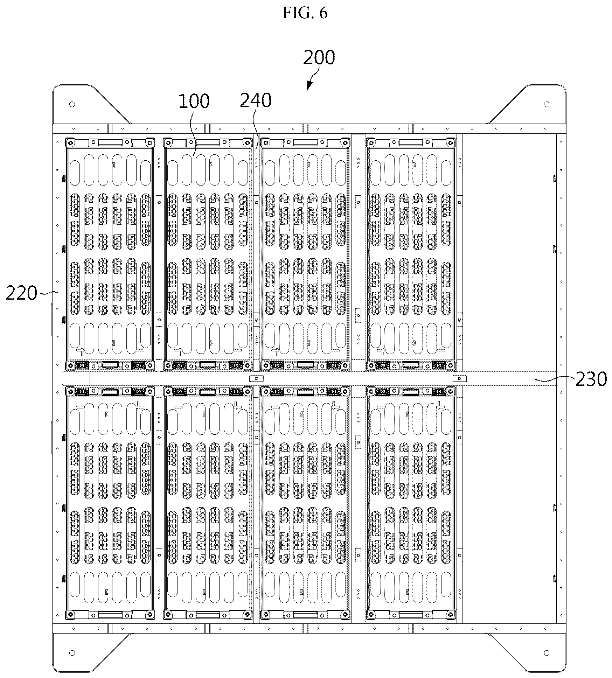

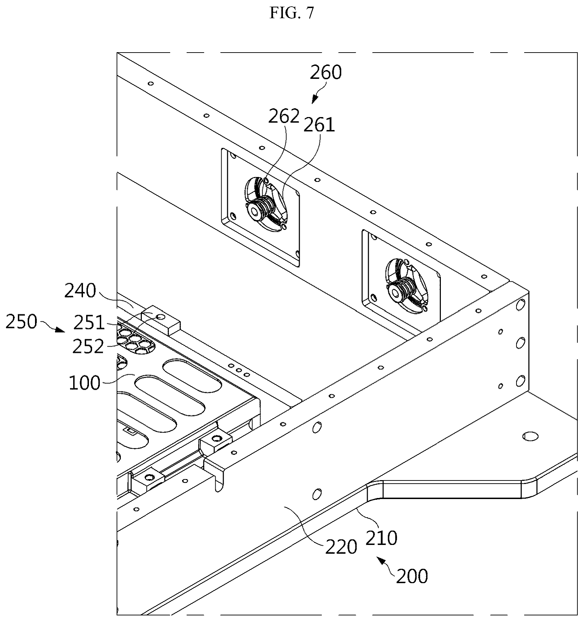

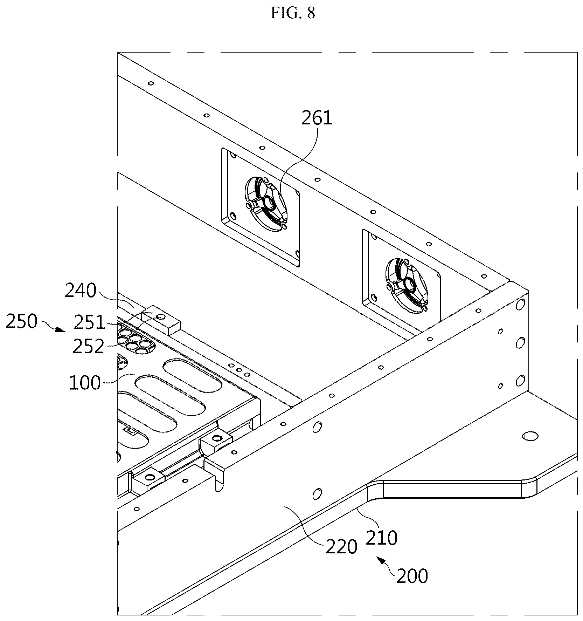

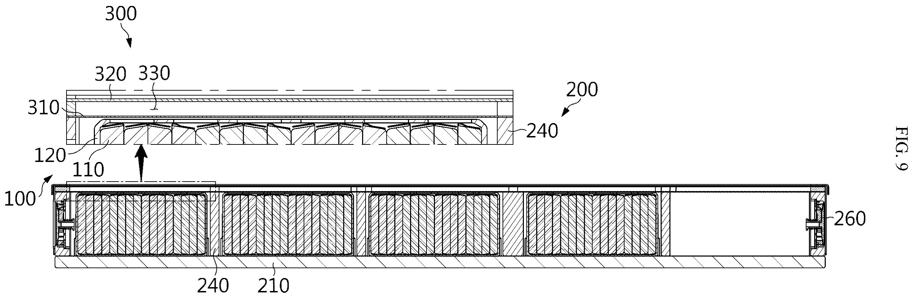

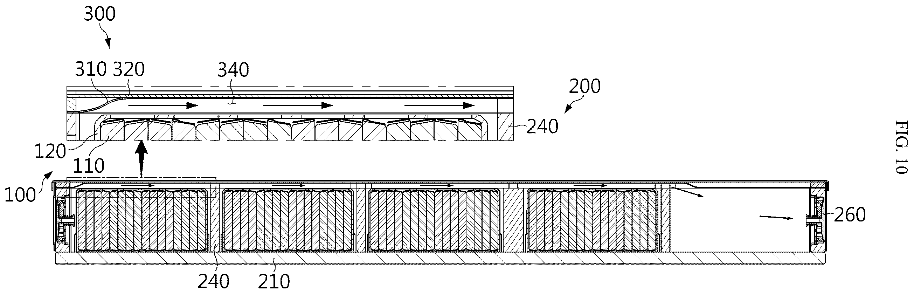

FIG. 2 is a perspective view showing a battery pack according to an embodiment of the present disclosure as a whole, FIG. 3 is an exploded perspective view showing the battery pack according to an embodiment of the present disclosure, FIG. 4 is a drawing showing a first cover coupled to a pack case in FIG. 3, FIG. 5 is an enlarged view of part B in FIG. 4, FIG. 6 is a plan view showing a battery pack according to an embodiment of the present disclosure with the cover member removed, FIG. 7 is a drawing showing a venting portion in the battery pack according to an embodiment of the present disclosure, FIG. 8 is a drawing showing a venting hole of the venting portion in FIG. 7, FIG. 9 is a cross-sectional view taken along line A-A' of FIG. 2, and FIG. 10 is a drawing showing a deformed form of the first cover in FIG. 9.

Referring to FIGS. 2 and 3, the battery pack 10 according to an embodiment of the present disclosure may include a plurality of battery modules 100, a pack case 200, and a cover member 300.

A plurality of battery cells 110 (see FIG. 9) are stacked in the battery module 100, and the battery module 100 may be provided in plurality, so that the plurality of battery modules 100 are arranged in various ways. For example, as in FIG. 3, the battery modules 100 may be arranged in a horizontal direction and a vertical direction, but are not limited thereto.

Referring to FIG. 9, the battery module 100 may have a plurality of battery cells 110 and a module case 120.

The plurality of battery cells 110 may be stacked. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 110, or the positive electrode lead and the negative electrode lead may be arranged in the same direction with respect to the longitudinal direction of the battery cell 110.

The battery cell 110 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

Referring to FIG. 9, the plurality of battery cells 110 are stacked and accommodated in the module case 120. The module case 120 surrounds the plurality of battery cells 110, thereby protecting the battery cells 110 from external vibrations or shocks.

The module case 120 may be formed in a shape corresponding to the shape of the stack in which a plurality of battery cells 110 are stacked. For example, if the stack in which a plurality of battery cells 110 are stacked is formed in a hexahedral shape, the module case 120 may also be formed in a hexahedral shape corresponding thereto. However, the present disclosure is not limited thereto. Here, the module case 120 may include an upper module case 120, a lower module case 120, and a side module case 120.

In addition, the module case 120 may be formed by, for example, bending a metal plate, whereby the module case 120 may be manufactured in an integral form. If the module case 120 is manufactured in an integral form, the coupling process may become easy and simple. Alternatively, the module case 120 may be provided in a separate form and coupled by welding, etc. However, the material of the module case 120 is not limited to a metal material.

Referring to FIGS. 3 and 6, a plurality of battery modules 100 are accommodated in the pack case 200. The pack case 200 may include, for example, a lower frame 210, a side frame 220, an inner frame 230, and a barrier frame 240.

The lower frame 210 is configured such that the plurality of battery modules 100 are placed thereon. The lower frame 210 may be formed in a rectangular plate shape, but is not limited thereto. The lower frame 210 forms the bottom of the pack case 200.

The side frame 220 may be configured to extend upward from an edge of the lower frame 210. The side frame 220 defines the height of the pack case 200 and forms a preset space between the side frame 220 and the lower frame 210. In addition, the plurality of battery modules 100 are placed in the space between the side frame 220 and the lower frame 210. The side frame 220 may include a long side frame with a relatively long length and a short side frame with a relatively short length. Alternatively, the lengths of the side frames 220 may all be the same.

The inner frame 230 extends upward within the lower frame 210 and is coupled to the side frame 220. One or more inner frames 230 may be provided, and the plurality of battery modules 100 may be arranged to face each other based on the inner frame 230.

The barrier frame 240 is coupled to the inner frame 230. In addition, the barrier frame 240 is interposed between the plurality of battery modules 100. In FIG. 3, one barrier frame 240 is arranged between two neighboring battery modules 100, but is not limited thereto.

Here, a fastening coupling unit 250 to which the second cover 320 is fastened may be formed on at least one of the inner frame 230 and the barrier frame 240, which will be described later.

The cover member 300 is coupled to the pack case 200. In addition, the cover member 300 is configured in a double structure in which at least one structure is formed to be deformable.

Referring to FIG. 3, the cover member 300 may include, for example, a first cover 310 and a second cover 320. The first cover 310 may be formed so that at least one side thereof is deformable. The first cover 310 may be formed so that deformation occurs at various locations, and, for example, the first cover 310 may be formed so that deformation occurs at a center portion thereof.

For this purpose, referring to FIG. 4, the edge of the first cover 310 is fastened and fixed by a bolt or the like after coming into contact with the coupling unit 350, and the center of the first cover 310 may be in an unfastened state. Here, referring to FIG. 3, the first cover 310 may be located at the inner side of the second cover 320.

Referring to FIG. 9, the second cover 320 is spaced from the first cover 310 by a preset interval 330. That is, a space may be formed between the first cover 310 and the second cover 320. Here, referring to FIG. 3, the second cover 320 may be located at the outer side of the first cover 310.

Referring to FIG. 3, as described above, the fastening coupling unit 250 may be formed on at least one of the inner frame 230 and the barrier frame 240, and the second cover 320 may be fastened to the fastening coupling unit 250 by a fastening member such as a bolt.

Referring to FIGS. 4 and 5, the fastening coupling unit 250 may include a protrusion 251 and a fastening hole 252. The protrusion 251 may be formed to protrude from at least one of the inner frame 230 and the barrier frame 240 (see FIG. 3). Also, the fastening hole 252 is formed in the protrusion 251. Here, the second cover 320 may be positioned at the upper side of the first cover 310 and may be fastened to the fastening coupling unit 250.

To explain this, as in FIG. 3, a through hole 311 may be formed in the first cover 310 at a position corresponding to the protrusion 251. Also, as in FIG. 4, when the first cover 310 is mounted in the pack case 200 to be coupled to the pack case 200, the through hole 311 of the first cover 310 may pass through the protrusion 251, and the first cover 310 may come into contact with at least one of the inner frame 230 and the barrier frame 240.

That is, the first cover 310 is placed on the inner frame 230 and the barrier frame 240 without being fixed to the inner frame 230 and the barrier frame 240 by passing through the fastening coupling unit 250, and the edge of the first cover 310 is fixed to the pack case 200. Therefore, if a flame and gas are generated and the pressure inside the battery module 100 increases, the shape of the center of the first cover 310 may be deformed (for example, the center may be bent upward).

Here, the first cover 310 may be deformed within the interval 330 formed between the first cover 310 and the second cover 320.

For example, referring to FIG. 9, normally, the first cover 310 is placed on the inner frame 230 and the barrier frame 240 and is maintained in a contacting state. However, when a flame and gas are generated and the pressure inside the battery module 100 increases, as shown in FIG. 10, the first cover 310 is deformed so that the center of the first cover 310 moves upward, and if the first cover 310 is deformed in this manner, a movement passage 340 is formed between the first cover 310 with the deformed center and the battery cell 110.

That is, deformation occurs in the center of the first cover 310, excluding the edge, due to the flame and venting gas generated from the battery cell 110, and as indicated by the arrow in FIG. 10, heat from the flame diffuses to another battery module 100 through the movement passage 340, thereby achieving an overall uniform thermal distribution and preventing heat from being concentrated in any one battery module 100.

Also, as indicated by the arrow in FIG. 10, the venting gas may move to the venting portion 260 through the movement passage 340 and be discharged. Referring to FIGS. 7 and 8, the venting portion 260 may be formed in the pack case 200.

The venting portion 260 may include a venting hole 261 and a venting valve 262. Referring to FIG. 8, the venting hole 261 is a hole through which the venting gas generated from the battery cell 110 is discharged, and may be formed in the pack case 200, for example, the side frame 220, but is not limited thereto.

In addition, referring to FIG. 7, the venting valve 262 may be installed in the venting hole 261. The venting valve 262 may be configured in various ways. For example, the venting valve 262 may be configured to close the venting hole 261 and be opened when the internal pressure of the pack case 200 exceeds a preset value.

That is, the venting valve 262 normally blocks the venting hole 261, but when the venting gas leaks from the battery cell 110 and the internal pressure of the pack case 200 exceeds the preset value or range, the venting valve 262 opens and the venting gas is discharged from the pack case 200 through the venting hole 261.

As described above, when the first cover 310 is deformed by the flame and the venting gas generated from the battery cell 110 so that the movement passage 340 is formed between the first cover 310 and the battery cell 110 as shown in FIG. 10, the venting gas moves along the movement passage 340 to the venting portion 260 (see the arrow in FIG. 10), and as the venting valve 262 is opened by the venting gas moved in this manner, the venting gas may be discharged to the outside of the pack case 200.

That is, the venting is facilitated by the movement passage 340 formed by the deformation of the first cover 310, thereby allowing gas to be discharged easily.

In addition, as described above, as the heat spreads to other battery modules 100 through the movement passage 340, concentration of heat in any one battery module 100 is prevented, thereby achieving a uniform thermal distribution.

Also, since the venting gas is discharged smoothly by the movement passage 340, ultimately, the chain reaction of flame due to flame propagation is prevented, thereby preventing the thermal runaway phenomenon.

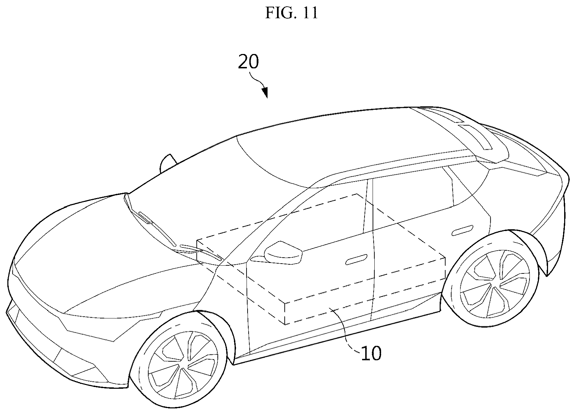

FIG. 11 is a drawing for illustrating a vehicle including the battery pack according to each embodiment of the present disclosure.

Referring to FIG. 11, the vehicle 20 according to an embodiment of the present disclosure may include one or more battery packs 10 according to each of the embodiments described above. Here, the vehicle 20 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery modules in which a plurality of battery cells are stacked;
a pack case in which the plurality of battery modules are accommodated; and
a cover member coupled to the pack case,
wherein the cover member is configured in a double structure in which at least one structure is formed to be deformable.

2. The battery pack according to claim 1,
wherein the cover member includes:
a first cover formed so that at least one side thereof is deformable; and
a second cover spaced apart from the first cover by a preset interval.

3. The battery pack according to claim 2,
wherein the first cover is located at an inner side, and the second cover is located at an outer side.

4. The battery pack according to claim 3,
wherein the pack case includes:
a lower frame on which the plurality of battery modules are mounted;
a side frame extending upwardly from an edge of the lower frame;
an inner frame extending upwardly inside the lower frame and coupled to the side frame; and
a barrier frame coupled to the inner frame and interposed between the plurality of battery modules,
wherein a fastening coupling unit to which the second cover is fastened is formed on at least one of the inner frame and the barrier frame.

5. The battery pack according to claim 4,
wherein the fastening coupling unit includes:
a protrusion configured to protrude from at least one of the inner frame and the barrier frame; and
a fastening hole formed in the protrusion

6. The battery pack according to claim 5,
wherein the first cover has a through hole formed at a position corresponding to the protrusion.

7. The battery pack according to claim 6,
wherein the through hole of the first cover passes through the protrusion, and the first cover comes in contact with at least one of the inner frame and the barrier frame.

8. The battery pack according to claim 4,
wherein the second cover is located at an upper side of the first cover and fastened to the fastening coupling unit.

9. The battery pack according to claim 2,
wherein the first cover is fastened at an edge thereof, and a movement passage is formed as deformation occurs in an area of the first cover except the edge due to a venting gas generated from the battery cell.

10. The battery pack according to claim 2,
wherein the first cover is deformed within the interval formed between the second cover and the first cover.

11. The battery pack according to claim 2,
wherein a venting portion is formed at the pack case.

12. The battery pack according to claim 11,
wherein the venting portion includes:
a venting hole through which a venting gas generated from the battery cell is discharged; and
a venting valve configured to close the venting hole and configured to be opened when an internal pressure of the pack case exceeds a preset value.

13. The battery pack according to claim 12,
wherein a movement passage is formed when the first cover is deformed, and the venting gas moves through the movement passage to the venting portion.

14. A vehicle comprising the battery pack according to any one of claims 1 to 13.
